# EUROPEAN PATENT SPECIFICATION

(11) **EP 1 554 640 B1**
(45) Date of publication and mention of the grant of the patent: **16.04.2008**
(21) Application number: 03756709.6
(22) Date of filing: 21.10.2003
(51) Int. Cl.: G06F 21/00

(54) **WATERMARK INSERTION APPARATUS AND WATERMARK EXTRACTION APPARATUS**
VORRICHTUNG ZUR EINBETTUNG UND ERKENNUNG VON WASSERZEICHEN
DISPOSITIF D'INSERTION DE FILIGRANE ET DISPOSITIF D'EXTRACTION DE FILIGRANE

(30) Priority: 25.10.2002 JP 2002311815; 12.05.2003 JP 2003133566; 17.09.2003 JP 2003324805
(43) Date of publication of application: 20.07.2005
(73) Proprietor: MATSUSHITA ELECTRIC INDUSTRIAL CO., LTD, Kadoma-shi, Osaka 571-8501 (JP)
(72) Inventor: SATO, Yuji, Ota-ku, Tokyo 144-0046 (JP); YAMAGUCHI, Takao, Kokubunji-shi, Tokyo 185-0022 (JP); SATO, Junichi, Machida-shi, Tokyo 195-0053 (JP); TAKEI, Ichiro,c/o Matsushita Elec.Ind.Co.,Ltd., Shiromi 1-chome, Chou-ku, Osaka 540-6319 (JP); ITO, Tomoaki,c/o Matushita Elec.Ind.Co.,Ltd, Shiromi 1-chome, Chou-ku, Osaka 540-6319 (JP)
(74) Representative: Grünecker, Kinkeldey, Stockmair & Schwanhäusser Anwaltssozietät
(86) International application number: PCT/JP2003/013405
(87) International publication number: WO 2004/038531

(56) References cited:
- WO-A-01/69355
- WO-A-99/01815
- COLLBERG C S ; THOMBORSON C: "Watermarking, tamper-proofing, and obfuscation - tools for software protection" IEEE TRANS. SOFTW. ENG. (USA), IEEE TRANSACTIONS ON SOFTWARE ENGINEERING, AUG. 2002, IEEE, USA, vol. 28, no. 8, August 2002 (2002-08), pages 735-746, XP002276100 ISSN: 0098-5589
- PATENT ABSTRACTS OF JAPAN vol. 2000, no. 06, 22 September 2000 (2000-09-22) & JP 2000 076064 A (HITACHI SOFTWARE ENG CO LTD), 14 March 2000 (2000-03-14) cited in the application
- PALSBERG J ET AL: "Experience with software watermarking" 11 December 2000 (2000-12-11), COMPUTER SECURITY APPLICATIONS, 2000. ACSAC '00. 16TH ANNUAL CONFERENCE NEW ORLEANS, LA, USA 11-15 DEC. 2000, LOS ALAMITOS, CA, USA,IEEE COMPUT. SOC, US, PAGE(S) 308-316 , XP010529828 ISBN: 0-7695-0859-6 Section 2.3 Section 3.2

## Description

### Technical Field

The present invention relates to a watermark insertion apparatus that inserts a watermark in a program in order to prevent and suppress illegal use and distribution of the program, and a watermark extraction apparatus.

### Background Art

With the advance of computer networks, it has become common for computer programs to be distributed via networks. As a computer program can easily be duplicated, there is a possibility of illegal secondary distribution of program duplicates, and theft of or tampering with algorithms in programs. There is thus a need to protect programs from such illegal use.

One example of a conventional program protection technology is a method whereby an electronic watermark is inserted in a program. With this method, a program is distributed with different watermark embedded for each distribution destination. Then, in the event of illegal use, watermark is extracted from the illegal user's program, and that watermark is analyzed. By this means, the source of circulation can easily be detected.

An actual watermark insertion method is disclosed, for example, in Unexamined Japanese Patent Publication No.2000-76064 (pages 3-4, FIG.2, FIG.7).

With this method, code with no dependency relationship to the order of execution is first detected. Next, a dummy variable operation is inserted in the detected part. Then the order of execution of the detected part containing the dummy variable operation is switched around randomly.

By performing such processing, a mechanism is implemented that changes this order of execution as electronic watermark for each distribution destination.

However, a problem with the conventional method of inserting an electronic watermark in a program is that it is easy to alter or delete a watermark based on collusion attack.

"Collusion attack" is an attack method whereby watermark data insertion locations are identified by finding differences in a plurality of programs in which watermarks have been inserted.

When different watermark is inserted in a program for each distribution destination, if differences between programs distributed to each distribution destination are found, only the locations at which watermarks have been inserted will surface as differences. There is thus a problem in that watermark insertion locations can easily be identified and watermark can easily be deleted or altered.

Collberg, C. S., 2002 ("Watermarking, Tamper-Proofing, and obfuscation - Tools for Software Protection", IEEE, ISSN: 0098-5589) reflects the basic functionality of tamper proofing. It discloses the method in which the receiving side of the program, the distribution destination, compares a code value calculated that the distribution source with the watermark verification code value, a tamper proofing code, calculated at the distribution destination. The program distribution source inserts a watermark that is different for each program distribution destination and a watermark verification code that is different for each program distribution destination. Consequently, both the watermark verification code, tamper proofing code, and the watermark itself are different for each program distribution destination.

### Disclosure of Invention

It is an object of the present invention to prevent easy generation of a program that does not have a watermark and operates normally, by inserting a watermark in such a way that the watermark insertion location cannot be identified.

The present invention generates watermark from ID information that uniquely identifies a program distribution destination, inserts the generated watermark in a program, and prevents the program from operating correctly if the watermark is tampered with, and also inserts the same watermark verification code to examine whether the watermark is tampered with in a program regardless of the distribution destination.

By this means, it is possible to prevent detection of watermark verification code constituting a watermark by means of collusion attack. As a result, a distribution destination cannot generate a program that does not have a watermark and operates normally, and thus is not able to circulate a program illegally.

### Brief Description of Drawings

FIG.1 is a configuration diagram of an illegal distribution prevention system implemented by means of watermark insertion according to Embodiment 1 of the present invention;
FIG.2 is a configuration diagram of a watermark insertion apparatus according to Embodiment 1;
FIG.3 is a configuration diagram of a watermark extraction apparatus according to Embodiment 1;
FIG.4 is a flowchart showing the operation of a watermark insertion section according to Embodiment 1;
FIG.5 is a drawing showing program code generated when Embodiment 1 is applied;
FIG.6 is a flowchart showing the operation of a watermark detection section of Embodiment 1;
FIG.7 is a flowchart showing the operation of a watermark insertion section according to Embodiment 2 of the present invention;
FIG.8 is a drawing showing program code generated by a watermark insertion section according to Embodiment 2;
FIG.9 is a flowchart showing the operation of a watermark insertion section according to Example 3;
FIG.10 is a drawing showing program code generated by a watermark insertion section according to Example 3;
FIG.11 is a configuration diagram of an illegal distribution prevention system implemented by means of watermark insertion according to Embodiment 4 of the present invention;
FIG.12 is a configuration diagram of a watermark insertion apparatus in Example 5;
FIG.13 is a flowchart showing the operation of a dummy code insertion section and watermark insertion section in Example 5;
FIG.14 is an example of program code generated by a watermark insertion section in Example 5;
FIG.15 is a flowchart of the operation of a watermark detection section in Example 5;
FIG.16 is a flowchart of the operation of a watermark insertion section of Example 6 of the present invention; and
FIG.17 is a drawing showing program code generated by a watermark insertion section according to Example 6.

### Best Mode for Carrying out the Invention

### (Embodiment 1)

An illegal program distribution prevention system comprising a watermark insertion apparatus and watermark extraction apparatus according to Embodiment 1 of the present invention will now be explained with reference to the accompanying drawings.

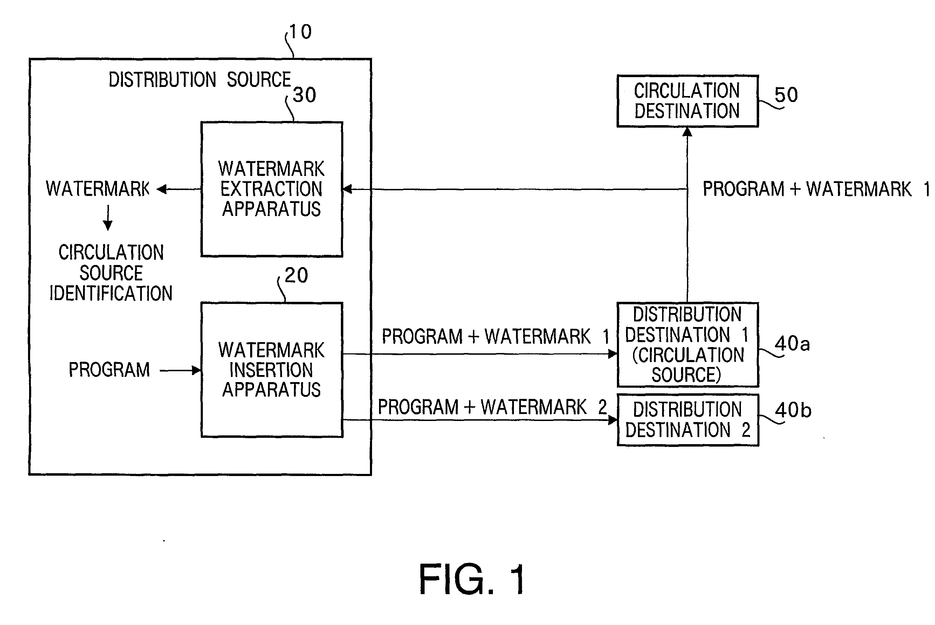

FIG.1 is a configuration diagram of an illegal distribution prevention system implemented by means of watermark insertion according to Embodiment 1.

First, at the time of program distribution, the distribution source 10 performs distribution with a different watermark inserted by means of a watermark insertion apparatus 20 for each of distribution destinations 40a and 40b (it is assumed that secondary distribution by distribution destinations is not authorized).

By performing distribution with watermarks embedded in this way, in the event of program circulation via illegal secondary distribution, for example, distribution source 10 can confirm the distribution destination by extracting, by means of a watermark extraction apparatus 30, the watermark from the program circulated to the circulation destination 50, and identify circulation source (distribution destination) 40a or 40b.

Furthermore, distribution destinations 40a and 40b will fear identification as the circulation source, and will refrain from illegal secondary distribution.

In this way, the illegal distribution prevention system suppresses illegal distribution by means of watermarks.

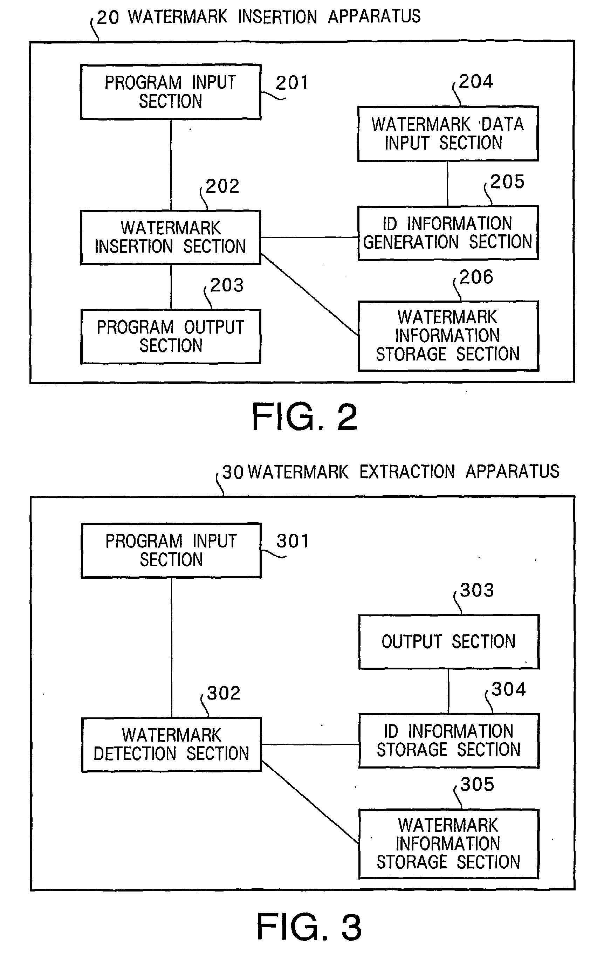

Next, watermark insertion apparatus 20 according to Embodiment 1 will be described using FIG.2. FIG.2 is a configuration diagram of a watermark insertion apparatus according to Embodiment 1.

Watermark insertion apparatus 20 is provided with a program input section 201. Program input section 201 is a means of inputting program code that inputs a watermark. Program input section 201 outputs program code to a watermark insertion section 202.

Watermark insertion section 202 is a means of generating a watermark to be actually embedded in a program from ID information generated by an ID information generation section 205, and inputting the watermark to program code output from program input section 201. If the program code output by program input section 201 is source code, watermark insertion section 202 compiles the source code and passes the watermark input location to a watermark information storage section 206 as an assembler code line number.

A program output section 203 is a means whereby watermark insertion section 202 outputs input program code.

A watermark data input section 204 inputs watermark data. The input watermark data is information that uniquely specifies a distribution destination, comprising the distribution destination address, telephone number, company, e-mail address, and so on. Distribution source information may also be input in the watermark data.

ID information generation section 205 generates ID information that can be uniquely determined from watermark data input by watermark data input section 204. ID information may be the input data itself, or may be data obtained by encryption of the input data. Also, ID information may be an ID for uniquely specifying watermark data in a database holding watermark data.

In embodiments of the present invention, a mode is used whereby watermark is generated based on ID information, but it is not absolutely necessary for watermark to be generated based on ID information, and it is sufficient to be able to specify a distribution destination uniquely from watermark. For example, it is also acceptable to enable a distribution destination to be uniquely specified by inserting a sequence number 1 to N in software as watermark, distributing sequence number i software to distribution destination A, distributing sequence number j software to distribution destination B, and so forth.

Watermark information storage section 206 is a means of storing an insertion location of a watermark inserted by watermark insertion section 202. Specifically, the assembly code line number of the code in which a watermark is inserted is stored.

Next, watermark extraction apparatus 30 according to Embodiment 1 will be described using FIG.3. FIG.3 is a configuration diagramof watermark extraction apparatus 30 according to Embodiment 1.

Program input section 301 is a means of inputting a program in which a watermark is input.

A watermark detection section 302 disassembles a program output from program input section 301, and extracts an input watermark from the watermark insertion location (assembler code line number) obtained from a watermark information storage section 305. Watermark detection section 302 then generates ID information from the extracted watermark, and passes this ID information to an ID information storage section 304.

ID information storage section 304 is a means of generating distribution destination information from ID information obtained from watermark detection section 302. When ID information is a database data ID, ID information storage section 304 obtains distribution destination information by extracting data from the ID. When ID information is distribution destination information encryption data, ID information storage section 304 obtains distribution destination information by performing decryption.

Watermark information storage section 305 is a means of storing a watermark insertion location of a distributed program. Watermark insertion location information is obtained from watermark information storage section 206 of watermark insertion apparatus 20.

Output section 303 is a means of outputting obtained distribution destination information.

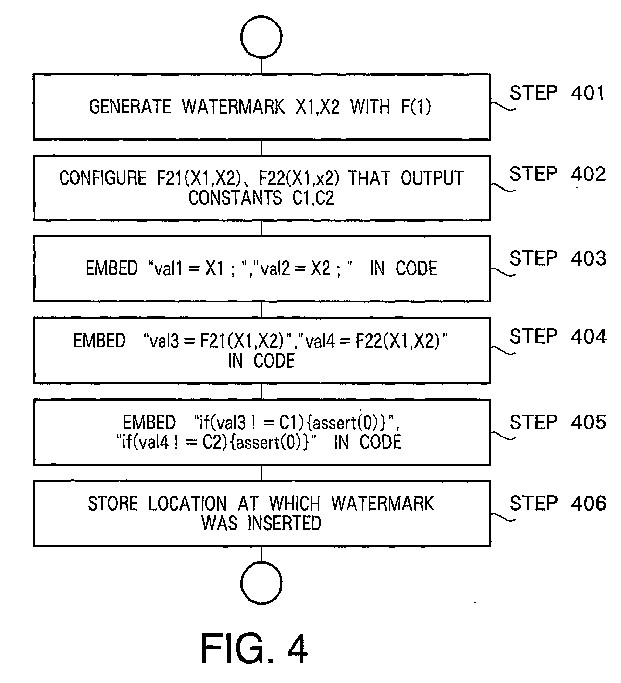

Next, watermark insertion section 202 according to Embodiment 1 will be described using FIG.4. FIG.4 is a flowchart showing the operation of watermark insertion section 202 according to Embodiment 1.

First, watermark insertion section 202 generates, by means of generation function F(1), watermark X1 and X2 to be actually inserted into the program from ID information I generated from distribution destination 40 information (step 401).

Next, watermark insertion section 202 configures function F21 that outputs constant C1 and function F22 that outputs constant C2 when watermark X1 and X2 is used as input (step 402).

Watermark insertion section 202 then embeds in the program code an expression that assigns watermark X1 and X2 to variables va11 and va12 (step 403).

Watermark insertion section 202 then embeds in the program code an expression that assigns F21(va11, va12) to variable val3, and F22(va11,va12) to variable val4 (step 404).

Next, watermark insertion section 202 embeds in the program code as watermark verification code a conditional branch that determines whether variable val3 and constant C1 are equal and halts the program if they are not equal, and a conditional branch that determines whether variable val4 and constant C2 are equal and halts the program if they are not equal (step 405).

Watermark insertion section 202 then stores the locations at which watermark and watermark verification code were inserted in step 403 through step 405 inwatermark information storage section 206 (step 406).

In this way, watermark insertion section 202 inserts in the program watermark and watermark verification code.

Watermark insertion section 202 inputs the expressions and conditional branches (watermark verification code) inserted in step 403 through step 405 in the order of execution of the program. A condition for F1 is that there should be an inverse function of F1 that generates I uniquely from X1 and X2, and a condition for F21 and F22 is that F21(X1,X2)==C1 and F22(X1,X2)==C2 should not hold other than for X1 and X2 ("==" indicates that the values are equal).

For example, a case will be considered in which ID information = 12345678, F1 is a function that divides an 8-digit value into two values from the 4th digit, F21(x,y) and F22(x,y) are 2-variable linear functions ax+by, C1 = 2345, and C2 = 5678.

In this case, watermark X1 = 1234 and X2 = 5678 is first generated from F1. F21 and F22 are configured by finding a1, a2, b1, and b2 that satisfy the conditions a1 × 1234 + b1 × 5678 = 2345 and a2 × 1234 + b2 × 5678 = 5678. For example, values of a1 = 1, a2 = 0.195667, a2 = 3.700972, and b2 = 0.195667 satisfy the conditions.

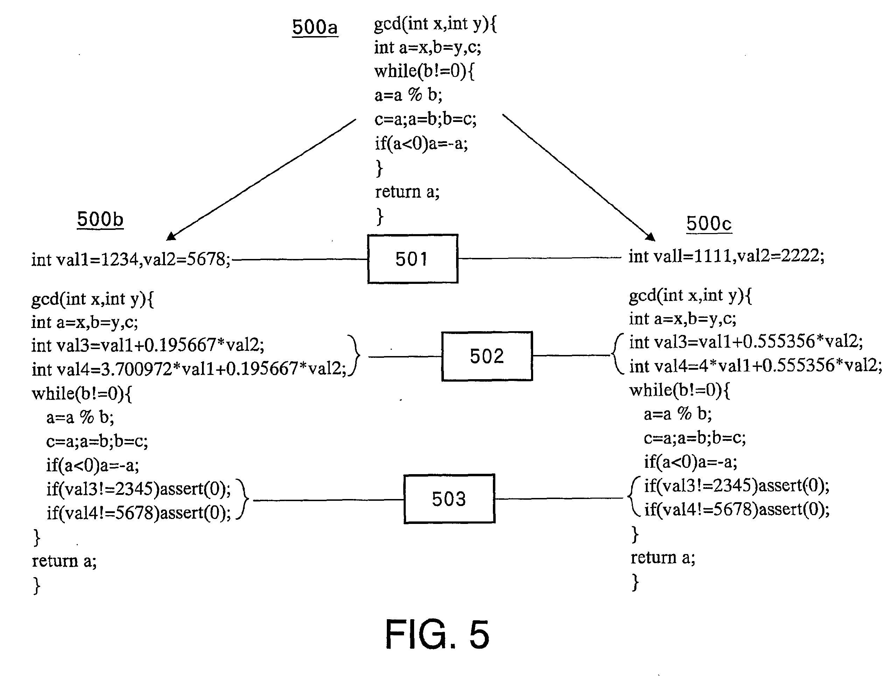

An example of program code generated when Embodiment 1 is applied is shown in FIG.5.

In FIG.5, 500a is a basic program forming the basis input by program input section 201. Programs 500b and 500c are watermark insertion programs in which watermark and watermark verification code have been input in basic program 500a.

First, in step 403, watermark insertion section 202 inputs watermark X1a (1234), X1b (5678) and X2a (1111), X2b (2222) generated from different ID information Ia (12345678) and Ib (11112222) into programs 500b and 500c (part indicated by reference numeral 501 in the drawing).

Next, in step 404, watermark insertion section 202 inserts mutually differing F21 and F22 respectively into watermark insertion programs 500b and 500c (part indicated by reference numeral 502 in the drawing).

Then, in step 405, watermark insertion section 202 embeds in the program code, as watermark verification code, a conditional branch that determines whether variable val3 and constant C1 (2345) are equal and halts the program if they are not equal (assert(0)), and a conditional branch that determines whether variable val4 and constant C2 (5678) are equal and halts the program if they are not equal (assert(0)) (part indicated by reference numeral 503 in the drawing).

The point to be noted here is that, when the differences between the two programs 500b and 500c are identified, parts 501 and 502 constituting watermark are detected, but conditional branches 503 constituting watermark verification code are not detected. Consequently, even if a watermark input location is detected by means of collusion attack on programs 500b and 500c, and alteration or deletion of the detected part is carried out, alteration or deletion cannot be performed on the conditional branches 503 constituting watermark verification code. Therefore, the watermark verification code part 503 does not meet the conditions, and the program no longer operates.

Thus, in the case of a simple method of altering or deleting only a location detected by means of collusion attack, it is possible to prevent acquisition of a program that operates normally when all watermarks are deleted.

For the sake of clarity, source code is used in FIG.5, but the same applies when binary code is used. Also, in the case of conditional branches 503, processing is performed so that the program is halted if the conditional statement is true, but it is also possible to perform processing that changes variable values in the program (using a++, for example) so that the program operates abnormally instead of halting.

Also, in Embodiment 1, two items of watermark are generated from ID information, but it is also possible to generate three or more items of watermark.

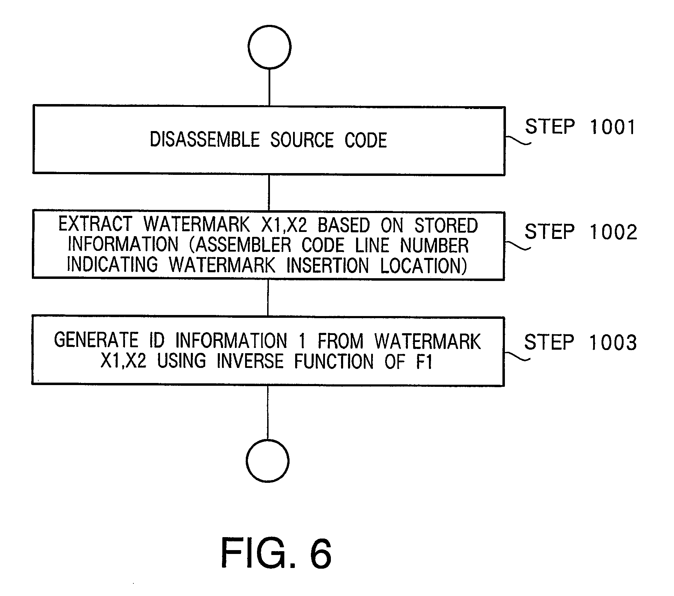

Next, watermark detection section 302 according to Embodiment 1 will be described using FIG.6. FIG.6 is a flowchart showing the operation of watermark detection section 302 of Embodiment 1.

First, watermark detection section 302 disassembles program execution code (step 1001).

Next, watermark detection section 302 refers to watermark information storage section 305, obtains stored information in which the watermark insertion location in the program is stored (that is, a line number indicating the insertion location), and based on this, specifies the input location of watermark X1 and X2. Watermark detection section 302 then extracts watermark X1 and X2 from the program (step 1002).

Next, watermark detection section 302 generates ID information using the inverse function of function F1 used when generating watermark X1 and X2 (step 1003).

In this way, watermark detection section 302 obtains ID information and performs specification of distribution destination 40.

With the above method, if the code execution order is switched around by means of optimization or "obfuscating" (that makes reading more difficult) by an execution code distribution destination or circulation destination, it is possible that the assembler line number of a watermark input location will be changed, preventing acquisition of the watermark. In consideration of such a possibility, the processing in step 1002 may be changed to processing whereby an assignment instruction is sought in lines around the assembler line number indicating the insertion location, and the operand part of the assignment instruction is extracted.

As described above, according to Embodiment 1, watermark verification code (part 503 in FIG.5) is the same regardless of the distribution destination, and therefore it is possible to prevent watermark verification code (part 503 in FIG.5) from being detected as a difference by means of collusion attack. Consequently, the insertion location of watermark verification code cannot be detected by collusion attack. As a result, in the case of a simple method of altering or deleting only a location detected by means of collusion attack, alteration or deletion of all watermarks cannot be performed, and it is not possible to generate a program without a watermark (or with an altered watermark) that operates normally. Thus, a distribution destination cannot generate a program that has no watermark and operates normally, and therefore cannot circulate a program illegally.

A mode is also possible in which the processing performed by watermark insertion apparatus 20 and watermark extraction apparatus 30 is in the form of a program and is executed by a general-purpose computer.

### (Embodiment 2)

Embodiment 2 provides for a case where a person intending to distribute a program illegally attempts to alter or delete watermark verification code of Embodiment 1 by detecting watermark by means of collusion attack, detecting a location at which a variable generated by a function used in the detected watermark is used (part indicated by reference numeral 503 in FIG.5), and altering or deleting the detected location.

Specifically, watermark is used, and watermark verification code necessary to operate a program normally is inserted in the program.

By this means it is possible to prevent a program from being operated normally when watermark verification code using watermark is detected and altered or deleted by means of the above-described procedure.

Embodiment 2 is described in detail below. The difference between the watermark insertion apparatus in Embodiment 2 and watermark insertion apparatus 20 in Embodiment 1 lies in the operation of watermark insertion section 202.

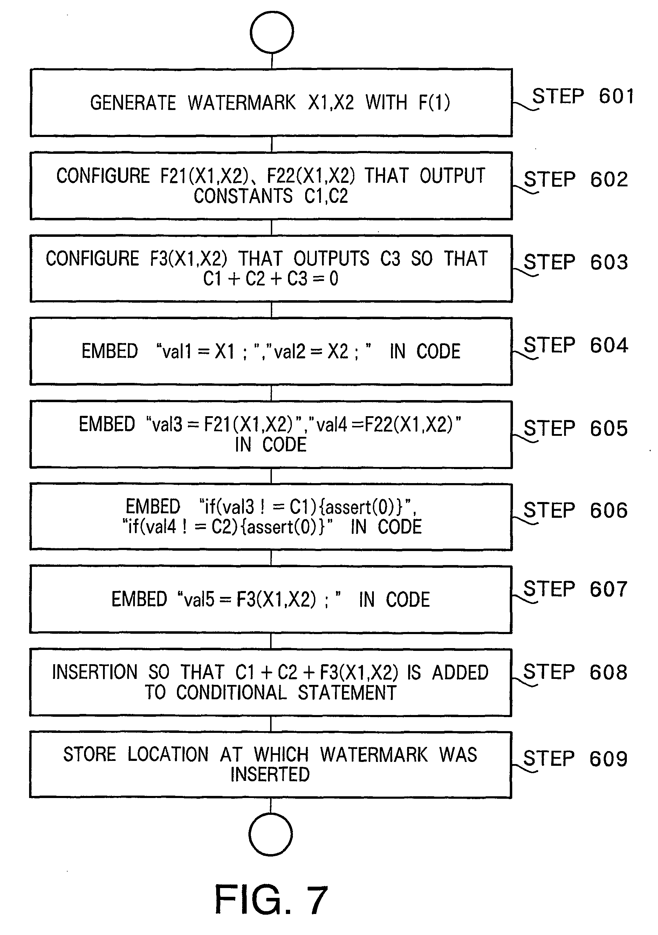

Next, the operation of the watermark insertion section of Embodiment 2 will be described using FIG.7. FIG. 7 is a flowchart showing the operation of the watermark insertion section of Embodiment 2.

The operations in step 601 and step 602 are the same as the operations in step 401 and step 402 described in Embodiment 1, and therefore descriptions thereof are omitted here.

Next, the watermark insertion section generates function F3 that generates C3 so that C1 + C2 + C3 = 0 from watermark X1 and X2 (step 603).

The watermark insertion section then embeds in the program code an expression that assigns watermark X1 and X2 to variables va11 and va12 (step 604).

The watermark insertion section then embeds in the program code an expression that assigns F21(va11,va12) to variable val3, and F22(va11,va12) to variable val4 (step 605).

Next, the watermark insertion section embeds in the program code as watermark verification code a conditional branch that determines whether variable val3 and constant C1 are equal and halts the program if they are not equal, and a conditional branch that determines whether variable val4 and constant C2 are equal and halts the program if they are not equal (step 606).

The watermark insertion section then embeds an expression that assigns F3 (val1,val2) to variable va15 (step 607).

Then the watermark insertion section inserts in the program, as watermark verification code, code that adds val3 + val4 + val5 to a decision statement that determines original code 0 (step 608).

Watermark insertion section 202 then stores the locations at which watermark and watermark verification codewere inserted in step 604 through step 608 in watermark information storage section 206 (step 609).

In this way, watermark insertion section 202 inserts a watermark in the program.

The points to be noted here are that variables val3, val4, and val5 detected by collusion attack are included in val3 + val4 + val5 inserted in step 608, and that val3 + val4 + val5 is inserted in the 0 part of the decision statement related to program operation. As a result, if an illegal user attempts to detect variables (val3, val4, va15) by means of collusion attack, and alter or delete a location using variables generated by a function using the detected variables, a decision statement related to program operation will also be altered or deleted. Thus, the program will not operate normally, and cannot be used illegally.

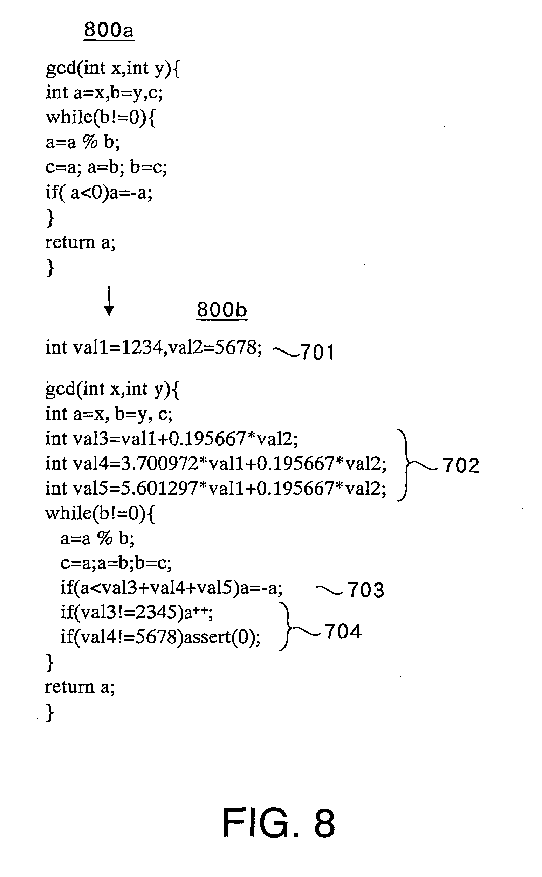

Next, program code generated by a watermark insertion section according to Embodiment 2 will be described using FIG.8.

In FIG.8, 800a is a basic program forming the basis input by program input section 201, and program 800b is a watermark insertion program in which a watermark has been input in basic program 800a.

In program 800b, watermark is inserted in the part indicated by reference numeral 701 in step 604, and calculation expressions (code) for watermark verification are inserted in the part indicated by reference numeral 702.

Then, in program 800b, the processing result of step 608 is inserted in the part indicated by reference numeral 703. Also, in program 800b, watermark verification code is inserted in the part indicated by reference numeral 704 in step 606.

The result of generating program 800b in this way is that, if a person attempting illegal use detects watermark verification code 703 from program 800b by means of collusion attack and alters or deletes the watermark verification code, since watermark verification code 703 is code related to the specifications (related to program input/output in the original code), the program will not operate normally if this code is deleted.

In order to change only the watermark verification code 703 decision statement within the watermark, it is necessary to understand the program specifications and know that watermark verification code 703 is specification related code. It takes time to understand the structure of a program, and watermark deletion cannot be performed by means of mechanical processing.

The condition C1 + C2 + F3 = 0 need not apply. In this case, C1 + C2 + F3 can be inserted in a decision statement that uses the value obtained from C1 + C2 + F3. For example, if C1 + C2 + F3 = 1, 1 of a decision statement determining 1 is switched with C1 + C2 + F3.

As described above, according to Embodiment 2, if a location (part 703 shown in FIG.8) at which variables generated by functions used in watermark (701, 702) detected by means of collusion attack are used is detected and altered or deleted, it becomes impossible for the program to operate normally. That is to say, it can be made impossible to generate a program without a watermark (or with an altered watermark) that operates normally, thereby enabling illegal program distribution to be prevented.

### (Example 3)

Example 3 alters code around a location at which watermark and watermark verification code are input, or all code, by performing processing such as "obfuscating." Consequently, code other than a watermark is detected by collusion attack, thus enabling watermark alteration or deletion based on collusion attack to be prevented with certainty.

Example 3 is described in detail below. The difference between the watermark insertion apparatus in Example 3 and watermark insertion apparatus 20 in Embodiment 1 lies in the operation of watermark insertion section 202.

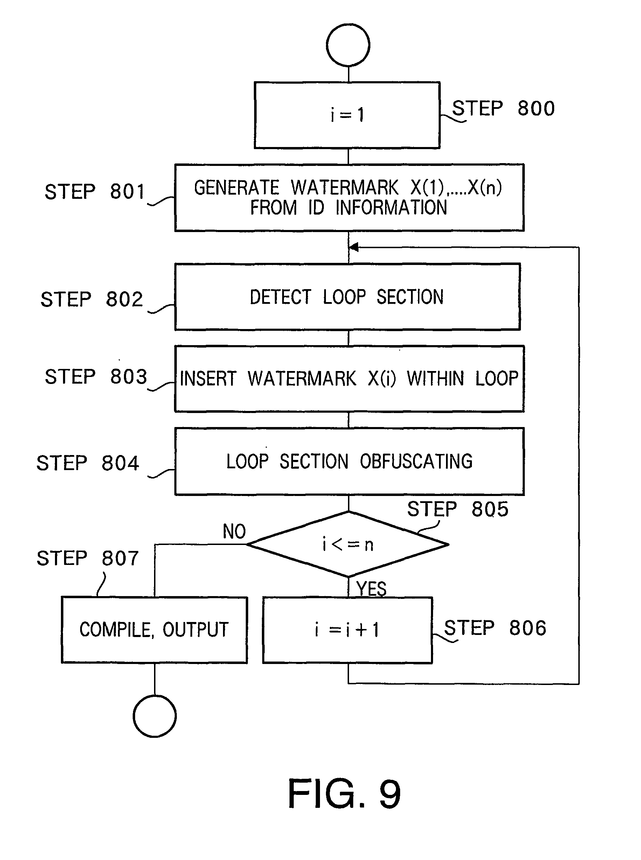

Next, the operation of watermark insertion section 202 of Example 3 will be described using FIG.9. FIG.9 is a flowchart showing the operation of watermark insertion section 202 of Example 3.

First, watermark insertion section 202 assigns an initial value of 1 to variable i (step 800). Then the watermark insertion section divides ID information into n items of information, and generates watermark X(1), X(2) ... (X)n (step 801).

Next, watermark insertion section 202 detects a loop section (while, for statements) in the program source code (step 802), and inserts watermark X(i) within the loop (step 803).

Watermark insertion section 202 then "obfuscates" the insertion location loop section by applying the method described in "Method for Scrambling Programs Containing Loops" (Monden et al., Technical Report of IEICE D-I, Vol. J80-D-I, No.7, pp.644-652, July 1997) (step 804). At this time, there are a number of variations in the program obfuscating method, and the variation is selected at random (or so as not to duplicate obfuscating executed on a program distributed in the past).

Then, watermark insertion section 202 determines whether variable i is less than or equal to the number of items of watermark n (step 805), and if variable i is less than or equal to n, increments variable i (step 806) and proceeds to the processing in step 802. If, on the other hand, variable i is determined not to be less than or equal to n in step 805 - that is, if all watermark has been input - watermark insertion section 202 next compiles the source code, stores the assembler code line numbers at which watermark was input, outputs the program, and terminates processing (step 807).

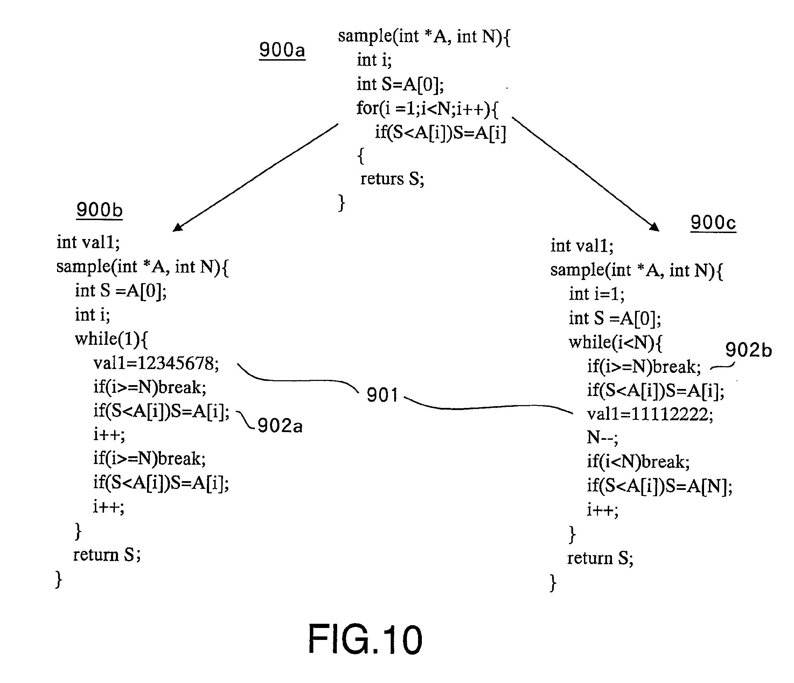

Next, program code generated by watermark insertion section 202 according to Example 3 will be described using FIG.10. In FIG.10, 900a is a basic program forming the basis input by program input section 201. Programs 900b and 900c are watermark insertion programs in which watermark 901 has been input in basic program 900a.

In programs 900b and 900c, implementation differs according to obfuscating, but the specifications (relationship to program input/output) are not changed. When the differences between programs 900b and 900c are identified, since program code has also been modified at locations other than the watermark location, non-watermark parts 902a and 902b are also detected as differences.

Therefore, in order to alter or delete the watermarks of programs 900b and 900c, it is necessary to analyze the programs and find out which parts are watermarks unrelated to the program specifications. Since determining whether a part is unrelated to the program specifications requires an understanding of the program specifications, it is difficult to mechanically delete a watermark embedded using this method.

As described above, according to Example 3, the watermark insertion section also operates as an alteration means that performs obfuscating processing so that program specifications are not affected in parts other than a location at which a program watermark is inserted, so that non-watermark code in parts related to program specifications is detected by collusion attack. It is thus difficult to identify a watermark insertion location based on collusion attack. As a result, it is possible to prevent watermark alteration or deletion with certainty, and to prevent illegal program circulation.

### (Embodiment 4)

In Embodiment 4, a watermark insertion apparatus is provided at a distribution destination, and a watermark is given to a distributed program at the distribution destination.

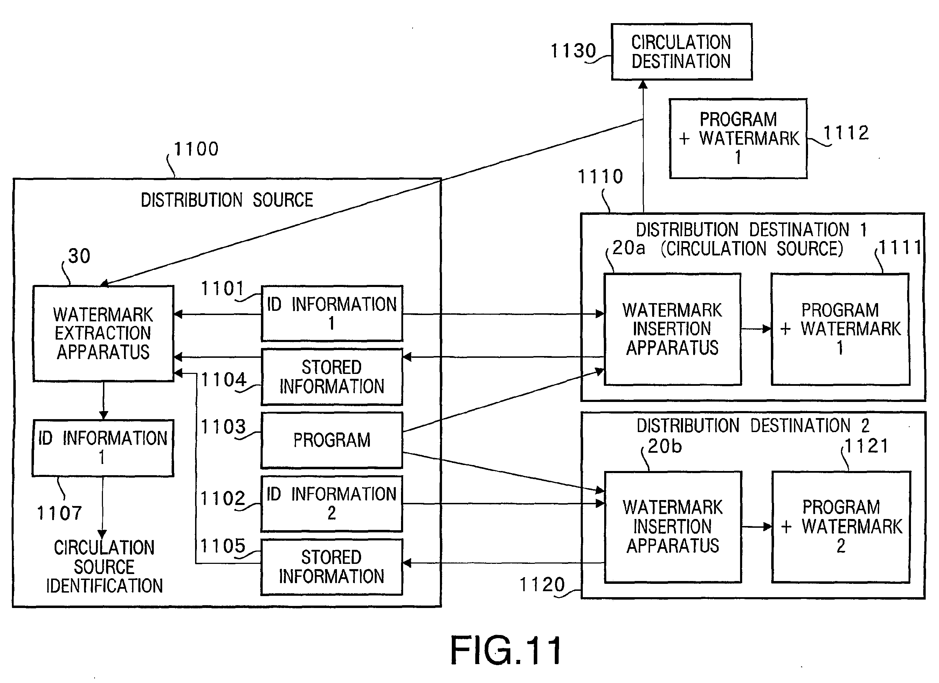

The configuration of an illegal distribution prevention system according to Embodiment 4 is described below using FIG.11. FIG.11 is a configuration diagram of an illegal distribution prevention system implemented by means of watermark insertion according to Embodiment 4. Parts identical to parts already described are assigned the same codes as the corresponding previously described parts.

In this system, distribution source 1100 first distributes to distribution destinations 1110 and 1120 respectively ID information 1101 and ID information 1102 that uniquely determine distribution destinations 1110 and 1120 respectively.

In response to this, distribution destinations 1110 and 1120 store ID information 1101 and 1102 in watermark insertion apparatuses 20a and 20b.

Next, distribution source 1100 distributes a program 1103 to distribution destinations 1110 and 1120.

In response to this, distribution destinations 1110 and 1120 generate programs 1111 and 1121 in which watermarks are inserted in distributed program 1103 using watermark insertion apparatuses 20a and 20b.

Watermark insertion apparatuses 20a and 20b may be watermark insertion apparatuses according to Embodiment 1 or 2.

Thereafter, insertion apparatuses 20a and 20b transmit storage information 1104 and 1105 to distribution source 1100, and distribution source 1100 holds storage information 1104 and 1105.

If distribution destination 1110 performs illegal secondary distribution to circulation destination 1130, distribution source 1100 obtains the circulated program 1112, and inputs it together with storage information 1104 and 1105 to watermark extraction apparatus 30. Distribution source 1100 then acquires ID information 1107 specifying distribution destination 1110 or 1120 by means of watermark extraction apparatus 30. Distribution source 1100 next compares ID information 1101 and 1102 distributed to distribution destinations 1110 and 1120 with acquired ID information 1107, and identifies distribution destination 1110 or 1120 that illegally circulated the program.

As described above, according to Embodiment 4, it is possible to easily distribute a program to an unspecified number of distribution destinations, and insert watermarks at distribution destinations. This kind of mode is effective when applied to a system in which it is desirable to simply distribute programs only, such as program distribution using digital broadcasting, multicasting or broadcasting via an IP network, and so forth.

### (Example 5)

Example 5 alters a program by adding dummy code that does not affect program specifications at a location at which a watermark insertion method or other method is implemented. As a result, code other than a watermark is detected at different locations when collusion attack is executed, thus enabling watermark alteration or deletion based on collusion attack to be prevented with certainty.

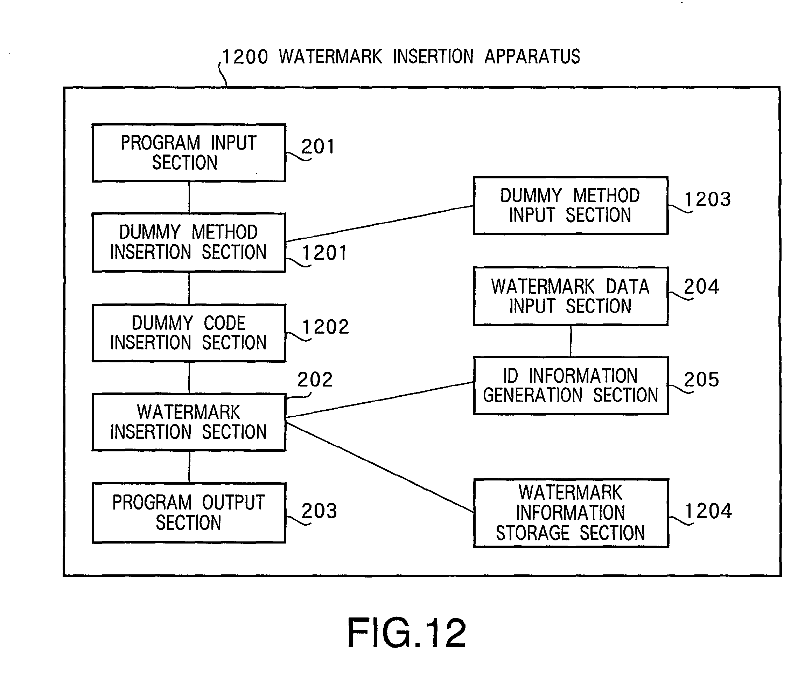

Next, a watermark insertion apparatus 1200 according to Example 5 will be described using FIG.12. FIG.12 is a configuration diagram of a watermark insertion apparatus of Example 5.

The operation of program input section 201 of watermark insertion apparatus 1200 according to Example 5 is identical to that of program input section 201 of watermark insertion apparatus 20 in other embodiments or Examples.

Watermark insertion apparatus 1200 is provided with a dummy method input section 1203 that inputs a redundant dummy method that does not affect execution of a program output by program input section 201. Dummy method input section 1203 outputs an input dummy method to a dummy method insertion section 1201.

Dummy method insertion section 1201 is a means of adding a dummy method input by dummy method input section 1203 as an area for embedding a watermark. Dummy method insertion section 1201 outputs a program to which a dummy method has been added to a dummy code insertion section 1202.

Dummy code insertion section 1202 is an alteration means of performing alteration without changing program specifications by inserting a dummy code pair not necessary for program execution results at locations at which all program methods (all methods including the dummy method) are implemented without affecting program execution. An example of dummy code that could be inserted is the PUSH/POP pair.

Watermark insertion section 202, program output section 203, watermark data input section 204, and ID information generation section 205 are means identical, respectively, to watermark insertion section 202, program output section 203, watermark data input section 204, and ID information generation section 205 of watermark insertion apparatus 20 in other embodiments or examples.

Watermark information storage section 1204 stores information on the correspondence between characters, numeric values, and symbols used in watermarks and bit strings, and information on the correspondence between bit strings and instruction codes, for watermarks inserted by watermark insertion section 202. Watermark information storage section 1204 also holds a method name and line number as identification information for a dummy method used for watermark insertion. Moreover, when encrypted data is used as watermark data, watermark information storage section 1204 also stores key information for decryption of the data.

In this way, a watermark insertion location can easily be identified using identification information, and watermark can easily be detected.

Next, a watermark extraction apparatus 30 according to Example 5 will be described. The difference between watermark extraction apparatus 30 according to Example 5 and watermark extraction apparatus 30 in other embodiments or examples lies in the operation of watermark information storage section 305.

Watermark detection section 302 acquires identification information of a method used for watermark insertion obtained from watermark information storage section 305 in a program output from program input section 301, and checks the method indicated by the identification information.

Next, watermark detection section 302 extracts watermark inserted in the program by performing conversion from instruction code to bit string, and from bit string to character, numeric value, or symbol, using the correspondence between characters, numeric values, and symbols used in watermarks and bit strings, and the correspondence between bit strings and instruction codes, obtained from the same watermark information storage section 305.

Watermark detection section 302 generates ID information from an extracted watermark, and outputs it to ID information storage section 304.

Watermark information storage section 305 is a means of holding identification information of a method in which a watermark is inserted. Watermark information storage section 305 also stores the correspondence between characters, numeric values, and symbols used in a watermark of a distributed program and bit strings, and the correspondence between bit strings and instruction codes. Moreover, when inserted watermark is encrypted, watermark information storage section 305 also holds the key for decryption of the data. Watermark information storage section 305 obtains the correspondence between characters, numeric values, and symbols and bit strings, the correspondence between bit strings and instruction codes, identification information for a method in which a watermark is inserted, and a key for decryption of encrypted data, from watermark information storage section 1204.

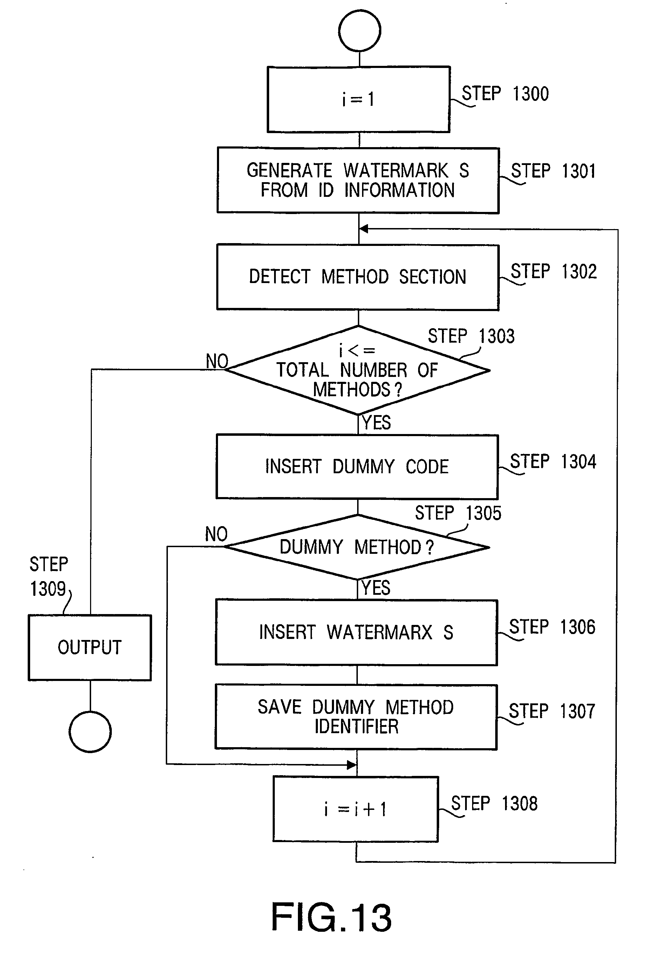

Next, the operation of dummy code insertion section 1202 and watermark insertion section 202 of Example 5 will be described using FIG.13. FIG.13 is a flowchart showing the operation of dummy code insertion section 1202 and watermark insertion section 202 of Example 5.

First, dummy code insertion section 1202 assigns an initial value of 1 to variable i (step 1300). Then watermark insertion section 202 generates watermark S from ID information, using the correspondence between characters, numeric values, and symbols and bit strings (step 1301).

Dummy code insertion section 1202 then detects a method section (location at which a method is implemented) in the program (step 1302) and determines whether variable i is less than or equal to the total number of methods in the program (step 1303), and if variable i is less than or equal to the total number of methods, inserts essentially unnecessary dummy code that does not affect the program specifications (step 1304).

There are a number of variations of the dummy code inserted at this time, and the variation is selected at random, or so as not to duplicate dummy code inserted in a program distributed in the past. That is to say, dummy code is inserted in such a way that the dummy code will be extracted by collusion attack.

Next, watermark insertion section 202 determines whether the detected method section is a dummy method (step 1305), and if it is a dummy method, inserts watermark S by applying the method described in "A Watermarking Method for Computer Program" (Monden et al., 1998 Symposium on Cryptography and Information Security, SCIS '98-9.2.A, Jan. 1998) (step 1306).

At this time, watermark insertion section 202 also retains dummy method identification information (step 1307).

Watermark insertion section 202 then increments variable i (step 1308) and proceeds to the processing in step 1302.

If, on the other hand, variable i is determined not to be less than or equal to the total number of methods in step 1303 - that is, if dummy code has been inserted in all methods, and watermark has been inserted in a dummy method thereamong - watermark insertion section 202 outputs a program in which watermark has been embedded (step 1309).

With a program generated by watermark insertion section 202 according to Example 5, implementation differs according to dummy code insertion, but the specifications (relationship to program input/output) are not changed. Also, since different dummy codes are inserted by the respective programs, when differences between programs are identified in order to identify a watermark insertion method, methods other than a method in which a watermark is inserted are also detected as differences.

Therefore, in order to alter or delete a program watermark, it is necessary to analyze the program and find out which method is a dummy method for watermark insertion unrelated to the program specifications. Since determining whether a part is unrelated to the program specifications requires an understanding of the program specifications, it is difficult to mechanically delete a watermark embedded using this method.

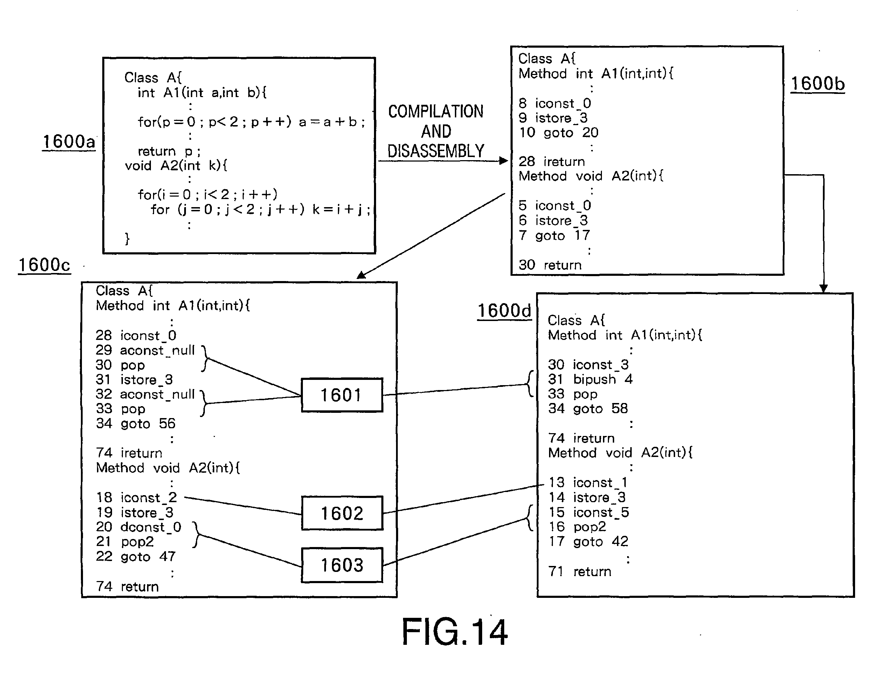

Program code generated according to Example 5 is shown in FIG.14.

The program indicated by reference numeral 1600a in FIG.14 is the basic source program. The program resulting from compilation of this program 1600a is the program that is input from program input section 201 to watermark insertion apparatus 1200. For ease of explanation, program 1600b resulting from disassembly of compiled program 1600a will be used in the description here.

Program 1600c and program 1600d are programs in which different watermarks and dummy code are inserted. In programs 1600a through 1600d, method A2 denotes a dummy method, and the numeral before each instruction mnemonic indicates the line number.

First, in step 1301, watermark insertion section 202 generates watermark S1 (100111 001101 101000 000000 000001) and S2 (100111 001101 101000 000000 000010) with 6 bits per character from different ID information I1 ((C)01) and I2 ((C)02), respectively, for use by watermark insertion programs 1600c and 1600d.

Next, in step 1302, dummy code insertion section 1202 detects a method section in watermark insertion program 1600b, and in step 1304 inserts mutually differing dummy code in A1, which is not a dummy method (part indicated by reference numeral 1601 in FIG.14).

Furthermore, when the method is dummy method A2, in step 1306 watermark insertion section 202 embeds as watermark in watermark insertion program 1600b only the number of bits allocated to the instructions subject to embedding from watermark information S1 and S2.

In this example, iconst_0 in method A2 of program 1600b is an instruction subject to embedding and 2-bit information is allocated thereto, and embedding is performed by extracting 2 bits from S1 and S2 (part indicated by reference numeral 1602 in FIG.14).

At this time, watermark insertion section 202 performs extraction from the low-order bits of each character, and when extraction is completed for one entire character, performs extraction from the low-order bits of the next character.

Dummy code insertion section 1202 also performs the same kind of dummy code insertion for method A2 as for method A1 (part indicated by reference numeral 1603 in FIG.14).

If the distribution destinations of programs 1600c and 1600d are in collusion, and find differences between the programs in order to identify the watermark information insertion location, the parts indicated by reference numerals 1601 and 1603, which are not watermark, will also be detected together with watermark 1602, making it difficult for a watermark insertion location to be identified based on collusion attack.

It is thus possible to prevent mechanical alteration or deletion of watermark, and to prevent illegal program circulation.

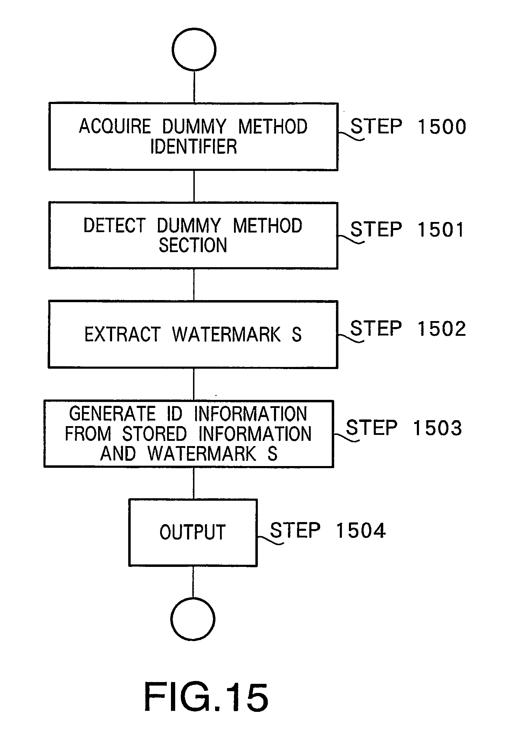

Next, the operation of watermark detection section 302 according to Example 5 will be described using FIG.15. FIG.15 is a flowchart showing the operation of watermark detection section 302 of Example 5.

First, watermark detection section 302 acquires dummy method identification information from watermark information storage section 305 (step 1500).

Then watermark detection section 302 detects a dummy method section in which a dummy method is implemented and a method section in the program using the acquired identification information (step 1501), and extracts watermark S from the dummy method section using the correspondence between bit strings and instruction codes stored in watermark information storage section 305 (step 1502).

Watermark detection section 302 generates ID information uniquely identifying the program distribution destination from information stored in ID information storage section 304 and extracted watermark S (step 1503), outputs the ID information (step 1504), and terminates processing.

Thus, watermark detection section 302 can easily detect a dummy method section and method section by using identification information, and can identify the program distribution destination by extracting watermark S from the dummy method section. As a result, illegal program circulation can be prevented.

As described above, according to Example 5, it is possible to insert in a program not only watermark but also dummy code, comprising an execution code pair, that does not affect the specifications. As a result, non-watermark code is detected in different places when collusion attack is performed, making it possible to prevent with certainty watermark alteration or deletion based on collusion attack.

### (Example 6)

Example 6 alters a program by switching around the order of parts other than a watermark insertion location, or the code of the entire program. As a result, non-watermark code is detected in different places when collusion attack is performed, making it possible to prevent with certainty watermark alteration or deletion based on collusion attack.

Example 6 is described in detail below. The difference between the watermark insertion apparatus in Example 6 and watermark insertion apparatus 20 in Embodiment 1 lies in the operation of watermark insertion section 202.

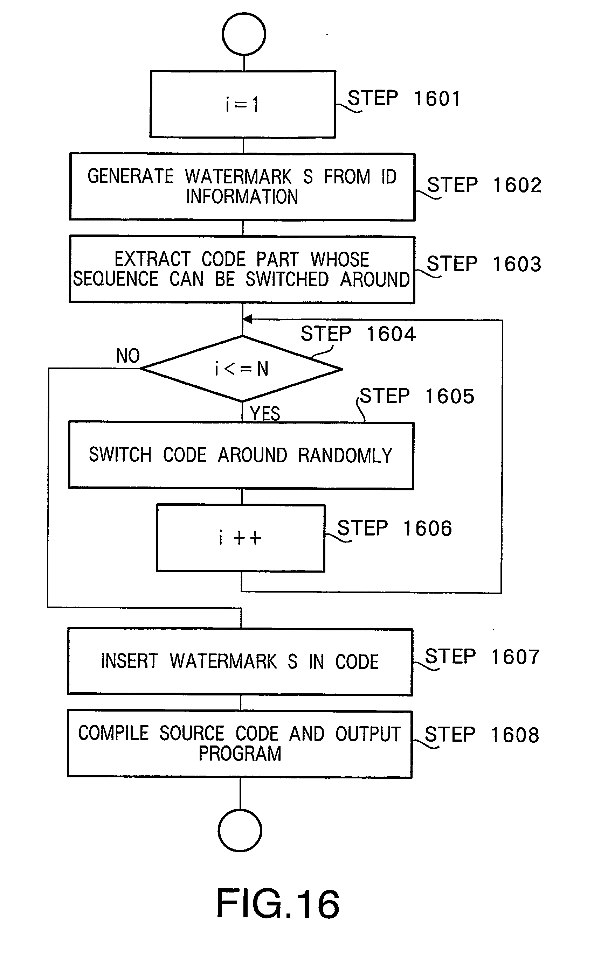

Next, the operation of watermark insertion section 202 of Example 6 will be described using FIG.16. FIG.16 is a flowchart showing the operation of watermark insertion section 202 of Example 6.

First, watermark insertion section 202 assigns an initial value of 1 to variable i (step 1601). Then watermark insertion section 202 generates, from ID information, watermark S (different for each distribution destination) for embedding in the code (program) (step 1602).

Next, watermark insertion section 202 extracts code parts, within the entire program, that will not affect the specifications - that is, that will allow the specifications to be maintained - even if their order is switched around (step 1603). A code part here means a part of a program composed of a plurality of codes.

Watermark insertion section 202 then determines whether variable i is less than or equal to the number (N) of code parts that allow the specifications to be maintained even if their order is switched around (step 1604), and if variable i is less than or equal to N, switches around the order of the code contained in that code part (step 1605), increments i (step 1606), and proceeds to step 1604.

If variable i is not less than or equal to N, watermark insertion section 202 inserts watermark S in the code (step 1607), compiles the source code, stores the assembler code line number at which watermark S was input, outputs the program, and terminates processing (step 1608).

In this way, watermark insertion section 202 converts parts other than a location at which watermark is input, while maintaining the specifications, by switching around the order of code parts that allow the specifications to be maintained even if their order is switched around.

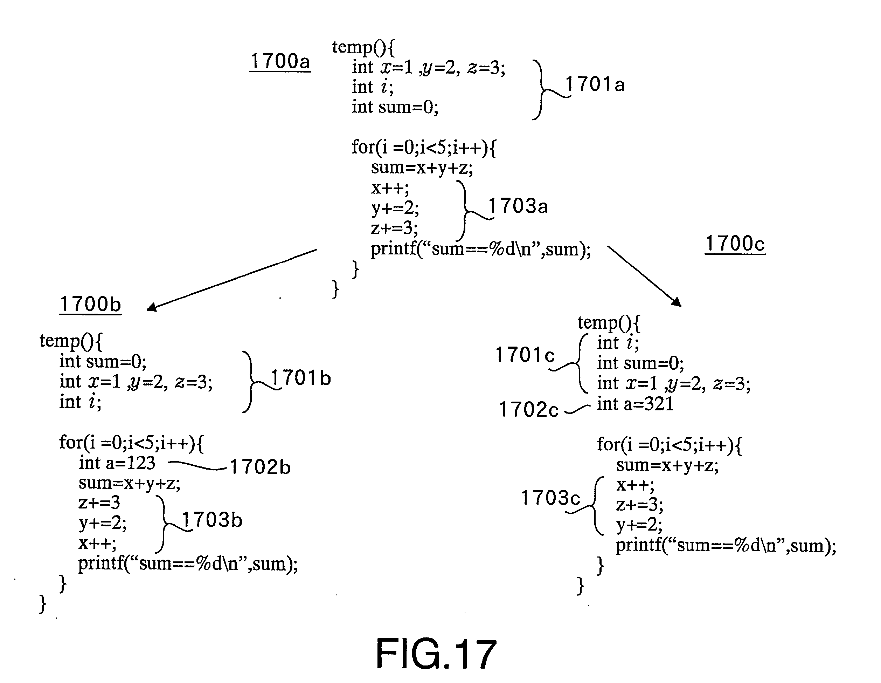

Next, program code generated by watermark insertion section 202 according to Example 6 will be described using FIG.17. Program 1700a is an original program input by program input section 201. Programs 1700b and 1700c are programs in which different watermark 1702b and 1702c for each distribution destination has been input in original program 1700a.

Programs 1700b and 1700c contain code parts 1701b and 1701c, and 1703b and 1703c. Code parts 1701b and 1701c, and 1703b and 1703c, are not code parts for insertion of a watermark contained in original program 1700a, and in these code parts 1701b and 1701c, and 1703b and 1703c, the code sequence of code parts 1701a and 1701b that allow the specifications to be maintained even if their code is switched around is changed.

Thus, program 1700b and program 1700c have been converted to different instruction sequences with respect to program 1700a, but the overall specifications have not changed. That is to say, in program 1700b and program 1700c, program 1700a has been converted while maintaining its specifications. When the differences between programs 1700b and 1700c are identified, since program code has also been modified at locations other than the watermark location, non-watermark code parts 1701b, 1701c, 1703b, and 1703c are also detected as differences.

Therefore, in order to alter or delete the watermarks of programs 1700b and 1700c, it is necessary to analyze the programs and find out which parts are watermarks that do not affect the program specifications. Since determining whether a part does not affect the program specifications requires an understanding of the program specifications, it is difficult to mechanically delete a watermark embedded using this method.

As described above in Example 6, watermark insertion section 202 operates as a conversion means that detects, from among program parts other than locations at which a program watermark is inserted, program parts that allow the specifications to be maintained even if the instruction sequence is switched around, and performs sequence conversion of program parts whose instruction sequence can be switched around without affecting the program specifications - that is to say, while maintaining the specifications. Consequently, program parts that do not affect program specifications, comprising non-watermark code, are detected by collusion attack. As a result, it is possible to prevent watermark alteration or deletion with certainty, and to prevent illegal program circulation.

Also, according to Example 6, with regard to sequence conversion of program parts for which switching around of the instruction sequence presents no problem, permutations of instruction statements within a program part are found, and conversion is performed in accordance with a permutation selected so as to be different for each distribution destination. As a result, the instruction sequences of program parts for which switching around of the instruction sequence presents no problem are different for each distribution destination. It is thus difficult to identify a program part for which switching around of the instruction sequence presents no problem, and it is possible to prevent watermark alteration or deletion with certainty.

As a method other than that of conversion in accordance with instruction sequence permutations, the order of program parts for which switching around of the instruction sequence presents no problem may be made different for each distribution destination by being converted randomly.

It is also possible to hold historical information on sequence conversion of code contained in code parts for which sequence switching presents no problem, and to use this historical information to perform conversion of code parts for which sequence switching presents no problem so as to be different for each distribution destination.

By this means, sequence conversion of code contained in code parts for which sequence switching presents no problem can be made different for each distribution destination reliably and easily.

### Industrial Applicability

As described above, according to the present invention it is possible to insert a watermark so that it is difficult to identify the watermark insertion location, and therefore the present invention is applicable over a wide range including the circulation of computer programs using a network.

## Claims

1. A watermark insertion apparatus (20) comprising:
a watermark insertion section (202) that inserts in a program a watermark that differs for each program distribution destination; and
a code insertion section that inserts in said program a watermark verification code that prevents said program from operating correctly when said watermark is tampered with;
said watermark verification code is made identical regardless of said distribution destination;
wherein for said program to be made to operate correctly said watermark verification code is necessary;
**characterized in that**
variables are assigned functions of values of the watermark, where the sum of said functions of said values is zero;
the sum of said variables is added, as watermark verification code, in a decision statement of the program so that the result of the decision statement of the program is not affected if the watermark and the watermark verification code have not been tampered, but is affected otherwise.

2. The watermark insertion apparatus (20) according to claim 1, wherein said watermark is generated from ID information that uniquely determines a program distribution destination.

3. The watermark insertion apparatus according to claim 1, further comprising a function insertion section that defines a function that outputs a predetermined constant from said watermark and inserts an expression that assigns said function to a variable in said program; wherein
said watermark verification code is a conditional branch that determines whether said variable and said constant are equal, and when said variable and said constant are not equal halts said program; and
said watermark verification code is made identical regardless of said distribution destination.

4. A program illegal distribution prevention system comprising:
the watermark insertion apparatus (20) according to claim 1;
a program input section (301) that inputs a program in which the watermark insertion apparatus (20) according to claim 1 has inserted said watermark and said watermark verification code; and
a watermark detection (302) section that extracts said watermark from said program and generates ID information that uniquely identifies said distribution destination based on said watermark;
wherein a distribution destination is identified based on generated said ID information.

5. The program illegal distribution prevention system according to claim 4, wherein said watermark insertion apparatus (20) is provided at said distribution destination.

6. A watermark insertion method comprising the steps of:
inserting in a program a watermark that differs for each program distribution destination;
preventing said program from operating correctly when said watermark is tampered with;
a watermark verification code is inserted in said program that is identical regardless of the program distribution destination;
wherein, for said program to be made to operate correctly, said watermark verification code is necessary;
**characterized in that**
variables are assigned functions of values of the watermark, where the sum of said functions of said values is zero;
the sum of said variables is added, as watermark verification code, in a decision statement of the program so that the result of the decision statement of the program is not affected if the watermark and the watermark verification code have not been tampered, but is affected otherwise.

7. A watermark insertion program that causes a computer to:
insert in a program a watermark that differs for each program distribution destination;
prevent said program from operating correctly when said watermark is tampered with;
insert in said program a watermark verification code that is identical regardless of the program distribution destination;
wherein, for said program to be made to operate correctly, said watermark verification code is necessary;
**characterized in that**
variables are assigned functions of values of the watermark, where the sum of said functions of said values is zero;
the sum of said variables is added, as watermark verification code, in a decision statement of the program so that the result of the decision statement of the program is not affected if the watermark and the watermark verification code have not been tampered, but is affected otherwise.

## Patentansprüche

1. Wasserzeichen-Einfügevorrichtung (20), die umfasst:
einen Wasserzeichen-Einfügeabschnitt (202), der in ein Programm ein Wasserzeichen einfügt, das sich ja nach Verteilungsziel des Programms unterscheidet; und
ein Code-Einfügeabschnitt, der in das Programm einen Wasserzeichen-Prüfcode einfügt, der verhindert, dass das Programm ordnungsgemäß arbeitet, wenn das Wasserzeichen manipuliert ist;
wobei der Wasserzeichen-Prüfcode unabhängig von dem Verteilungsziel identisch ausgeführt ist;
wobei, damit das Programm ordnungsgemäß arbeitet, der Wasserzeichenprüfcode erforderlich ist;
**dadurch gekennzeichnet, dass**
Variablen Funktionen von Werten des Wasserzeichens zugewiesen werden, wobei die Summe der Funktionen der Werte 0 beträgt;
die Summe der Variablen als Wasserzeichen-Prüfcode in einer Entscheidungserklärung des Programms so hinzugefügt wird, dass das Ergebnis der Entscheidungserklärung des Programms nicht beeinflusst wird, wenn das Wasserzeichen und der Wasserzeichen-Prüfcode nicht manipuliert worden sind, ansonsten jedoch beeinflusst wird.

2. Wasserzeichen-Einfügevorrichtung (20) nach Anspruch 1, wobei das Wasserzeichen aus Kennungsinformationen generiert wird, die ein Verteilungsziel des Programms eindeutig bestimmen.

3. Wasserzeichen-Einfügevorrichtung nach Anspruch 1, das des Weiteren einen Funktions-Einfügeabschnitt umfasst, der eine Funktion definiert, die eine vorgegebene Konstante von dem Wasserzeichen ausgibt und einen Ausdruck einfügt, der die Funktion einer Variablen in dem Programm zuweist; wobei
der Wasserzeichen-Prüfcode eine Bedingungsverzweigung ist, die bestimmt, ob die Variable und die Konstante gleich sind, und, wenn die Variable und die Konstante nicht gleich sind, das Programm anhält; und
der Wasserzeichen-Prüfcode unabhängig von dem Verteilungsziel identisch ausgeführt ist.

4. System zum Verhindern der illegalen Verteilung von Programmen, das umfasst:
die Wasserzeichen-Einfügevorrichtung (20) nach Anspruch 1;
einen Programm-Eingabeabschnitt (301), der eine Programm eingibt, in das die Wasserzeichen-Einfügevorrichtung (20) nach Anspruch 1 das Wasserzeichen und den Wasserzeichen-Prüfcode eingefügt hat;
einen Wasserzeichen-Erfassungsabschnitt (302), der das Wasserzeichen aus dem Programm extrahiert und Kennungsinformationen generiert, die das Verteilungsziel auf Basis des Wasserzeichens eindeutig identifizieren;
wobei ein Verteilungsziel auf Basis der generierten Kennungsinformationen identifiziert wird.

5. System zum Verhindern der illegalen Verteilung von Programmen nach Anspruch 4, wobei die Wasserzeichen-Einfügevorrichtung (20) an dem Verteilungsziel bereitgestellt wird.

6. Wasserzeichen-Einfügeverfahren, dass die folgenden Schritte umfasst:
Einfügen eines Wasserzeichens in ein Programm, dass sich je nach Verteilungsziel des Programms unterscheidet;
Verhindem, dass das Programm ordnungsgemäß arbeitet, wenn das Wasserzeichen manipuliert ist;
Einfügen eines Wasserzeichen-Prüfcodes in das Programm, der unabhängig von dem Verteilungsziel des Programms identisch ist;
wobei, damit das Programm ordnungsgemäß arbeitet, der Wasserzeichen-Prüfcode erforderlich ist;
**dadurch gekennzeichnet, dass**
Variablen Funktionen von Werten des Wasserzeichens zugewiesen werden, wobei die Summe der Funktionen der Werte 0 beträgt;
die Summe der Variablen als Wasserzeichen-Prüfcode in einer Entscheidungserklärung des Programms so hinzugefügt wird, dass das Ergebnis der Entscheidungserklärung des Programms nicht beeinflusst wird, wenn das Wasserzeichen und der Wasserzeichen-Prüfcode nicht manipuliert worden sind, ansonsten jedoch beeinflusst wird.

7. Programm zum Einfügen von Wasserzeichen, das einen Computer veranlasst:
in ein Programm ein Wasserzeichen einzufügen, dass sich je nach Programm-Verteilungsziel unterscheidet;
zu verhindern, dass das Programm ordnungsgemäß arbeitet, wenn das Wasserzeichen manipuliert ist;
in das Programm einen Wasserzeichen-Prüfcode einzufügen, der unabhängig von dem Verteilungsziel des Programms identisch ist;
wobei, damit das Programm ordnungsgemäß arbeitet, der Wasserzeichen-Prüfcode erforderlich ist;
**dadurch gekennzeichnet, dass**
Variablen Funktionen von Werten des Wasserzeichens zugewiesen werden, wobei die Summe der Funktionen der Werte 0 beträgt;
die Summe der Variablen als Wasserzeichen-Prüfcode in einer Entscheidungserklärung des Programms so hinzugefügt wird, dass das Ergebnis der Entscheidungserklärung des Programms nicht beeinflusst wird, wenn das Wasserzeichen und der Wasserzeichen-Prüfcode nicht manipuliert worden sind, ansonsten jedoch beeinflusst wird.

## Revendications

1. Dispositif d'insertion de filigrane (20) comprenant:
une section d'insertion de filigrane (202) qui insère dans un programme un filigrane qui diffère pour chaque destination de distribution de programme; et
une section d'insertion de code qui insère dans ledit programme un code de vérification de filigrane qui empêche ledit programme d'opérer correctement lorsque ledit filigrane est falsifié;
ledit code de vérification de filigrane est fait de sorte à être identique indépendamment de ladite destination de distribution;
où pour que ledit programme puisse opérer correctement, ledit code de vérification de filigrane est nécessaire;
**caractérisé en ce que**
des fonctions de valeurs du filigrane sont attribuées à des variables, où la somme desdites fonctions desdites valeurs est nulle;
la somme desdites variables est ajoutée, comme code de vérification de filigrane, dans une instruction de décision du programme de telle sorte que le résultat de l'instruction de décision du programme ne soit pas affecté si le filigrane et le code de vérification de filigrane n'ont pas été falsifiés, mais est affecté dans le cas contraire.

2. Dispositif d'insertion de filigrane (20) selon la revendication 1, dans lequel ledit filigrane est généré à partir d'une information d'ID qui détermine de manière unique une destination de distribution de programme.

3. Dispositif d'insertion de filigrane selon la revendication 1, comprenant en plus une section d'insertion de fonction qui définit une fonction qui sort une constante prédéterminée depuis ledit filigrane et insère une expression qui attribue ladite fonction à une variable dans ledit programme; où
ledit code de vérification de filigrane est une branche conditionnelle qui détermine si ladite variable et ladite constante sont égales, et lorsque ladite variable et ladite constante ne sont pas égales arrête ledit programme; et
ledit code de vérification de filigrane est établi de sorte à être identique indépendamment de ladite destination de distribution.

4. Système de prévention d'une distribution illégale d'un programme comprenant:
le dispositif d'insertion de filigrane (20) selon la revendication 1;
une section d'entrée de programme (301) qui entre un programme dans lequel le dispositif d'insertion de filigrane (20) selon la revendication 1 a inséré ledit filigrane et ledit code de vérification de filigrane; et
une section de détection de filigrane (302) qui extrait ledit filigrane dudit programme et génère une information d'ID qui identifie de manière unique ladite destination de distribution sur la base dudit filigrane;
où une destination de distribution est identifiée sur la base de ladite information d'ID générée.

5. Système de prévention d'une distribution illégale d'un programme selon la revendication 4, dans lequel ledit dispositif d'insertion de filigrane (20) est pourvu à ladite destination de distribution.

6. Procédé d'insertion de filigrane comprenant les étapes consistant à:
insérer dans un programme un filigrane qui diffère pour chaque destination de distribution de programme;
empêcher ledit programme d'opérer correctement lorsque ledit filigrane est falsifié;
un code de vérification de filigrane est inséré dans ledit programme qui est identique indépendamment de la destination de distribution de programme;
où, pour que ledit programme puisse opérer correctement, ledit code de vérification de filigrane est nécessaire;
**caractérisé en ce que**
des fonctions de valeurs du filigrane sont attribuées à des variables, où la somme desdites fonctions desdites valeurs est nulle;
la somme desdites variables est ajoutée, comme code de vérification de filigrane, dans une instruction de décision du programme de telle sorte que le résultat de l'instruction de décision du programme ne soit pas affecté si le filigrane et le code de vérification de filigrane n'ont pas été falsifiés, mais est affecté dans le cas contraire.

7. Programme d'insertion de filigrane qui amène un ordinateur à:
insérer dans un programme un filigrane qui diffère pour chaque destination de distribution de programme;
empêcher ledit programme d'opérer correctement lorsque ledit filigrane est falsifié;
insérer dans ledit programme un code de vérification de filigrane qui est identique indépendamment de la destination de distribution de programme;
où, pour que ledit programme puisse opérer correctement, ledit code de vérification de filigrane est nécessaire;
**caractérisé en ce que**
des fonctions de valeurs du filigrane sont attribuées à des variables, où la somme desdites fonctions desdites valeurs est nulle;
la somme desdites variables est ajoutée, comme code de vérification de filigrane, dans une instruction de décision du programme de telle sorte que le résultat de l'instruction de décision du programme ne soit pas affecté si le filigrane et le code de vérification de filigrane n'ont pas été falsifiés, mais est affecté dans le cas contraire.
